# EUROPEAN PATENT SPECIFICATION

(11) **EP 0 753 422 B1**
(45) Date of publication and mention of the grant of the patent: **15.09.1999**
(21) Application number: 96500099.5
(22) Date of filing: 15.07.1996
(51) Int. Cl.: B60J 10/00, B65D 90/06, B60P 3/20, B60J 5/06

(54) **Airtight and taut sealing device of isothermal curtains of refrigerated vehicles**
Luftdichte Abdichtung und Spannvorrichtung für isothermische Vorhänge von Kühlfahrzeugen
Joint étanche à l'air et dispositif de tension pour rideaux isothermiques dans des véhicules frigorifiques

(30) Priority: 14.07.1995 ES 9501952; 30.08.1995 ES 9502256
(43) Date of publication of application: 15.01.1997
(73) Proprietor: Miro Bravo, Vicente, 03800 Alcoy (Alicante) (ES)
(72) Inventor: Miro Bravo, Vicente, 03800 Alcoy (Alicante) (ES)
(74) Representative: Ungria Lopez, Javier

(56) References cited:
- CH-A- 579 997
- FR-A- 2 352 689
- FR-A- 2 580 598
- FR-A- 2 599 326
- FR-A- 2 613 986

## Description

### OBJECT OF THE INVENTION

This invention refers to a sealing and tension device for isothermal curtains in refrigerator vehicles, with the object of preventing loss of frigories on the curtain-to-frame union areas or unloading perimeter of a refrigeration trailer.

Another object of the invention consists in empowering a rapid and homogeneous tensing of the girths or belts used to achieve the sealing of the isothermal curtains, in such a manner that loss of frigories are also prevented.

Therefore, the invention is applicable for transporting products which require low temperature for their conservation, and more particularly for those trolleys or refrigeration vehicles which have at least one of the laterals walls constituted by an isothermal curtain.

### BACKGROUND OF THE INVENTION

Conventionally well known is the use of refrigeration vehicles equipped with walls determined by isothemal curtains constituted by flexible foils supported on a rail over which they are capable of displacement, and which are equipped on their lower part with a plurality of belts or like elements, on the ends of which hooks are included for adequatly tensed attachment to the framework, thus obtaining a lock which preserves the product to be transported, maintaining a specific temperaturae in its interior.

An example of the lock with belt means is constituted by the Spanish utility model number 191.778.

This type of devices presents the disadvantage that the tension is individually produced with each one of the belts or like elements, which signifies that the tension of the curtain is produced during a long period of time, also making it difficult to achieve a homogeneous tension.

Moreover, the type of trolley described, includes the disadvantage that the losses of cold are substancially greater than that produced in trolleys with stiff walls, fundamentally due to the fact that the tightness or lock of the curtain on the edge or framework of the trolley on which the curtain closes, is not optimum.

In this respect, the tension systems of the curtain play an important roll to achieve an improved isolation, though since they do not provide a homogeneous tension, the tightness or lock is not adequate, apart from which, no gasket exists between the framework and the curtain, on which zone, the greatest loss of frigores are produced.

### DESCRIPTION OF THE INVENTION

In order to solve the previously indicated disadvantages, the invention consists of a sealing lock and tension device for the isothermal curtains employed in refrigeration vehicles, characterized in that a tubular body is arranged throughout all the framework or perimeter of the wall to be covered by means of the curtain; once said isothermal curtains have been closed and tensed, the tubular body is inflated by means of a fluid which may be aire, liquid, etc., thus resulting in an additional pressure throughout the locking perimeter, considerably reducing the loss of frigories.

Moreover, the tubular body is supported and protected by means of a longitudinal cover which envelops it and is attached to the framework.

Another characterstic of the invención consists in that, on the lower section of the framework, and below the assembly determined by the tubular body and the longitudinal cover, a profile has been provided, preferably constructed of rubber, which protects the assembly constituted by the tubular body and the cover when deflated during loading and unloading operations, since it constitutes a stopping means for the trolley which performs said loading and unloading operations, preventing that said trolley exerts pressure against the tubular body when it stops against the protection profile.

It is also convenient to indicate that the tensing of the isothermal curtains is carried out in a totally original manner by means of the invention, since it offers greater tightness and is conducted in a homogeneous, equal way throughout all the perimeter in a minimum space of time.

In order to attain these advantages, the tension girths of the isothermal curtains are retained in a shaft situated transverally to said girths.

The shaft is related to rotation means in such a manner, that when the angular displacement of the same is produced, it results in the winding of the girths on the shaft, thus compulsively tensing them all simultaneously in a homogeneous manner.

In order to achieve the retention of the girths on the shaft, each one of the same is equipped on its end with a curved buckle which is retained on prongs provided on the shaft.

The rotation means on the shaft are determined by a worm placed in a box in which it engages with the shaft.

The worm ends according to an outer head on which a handle is placed by means of which the manual tensing of all the girths simultaneously is facilitated, with a prior retention of the same by means of its buckles on the shaft prongs.

On the other hand, the worm may be related with a motor by means of which the automatic tensing of the isothermal curtain is conducted.

Herewith, in order to make more comprehensible this specification, and forming an integral part of the same, a series of figures are attached, in which, with an illustrative and non limitative character, an embodiment of the invention has been represented.

### BRIEF STATEMENT OF THE FIGURES

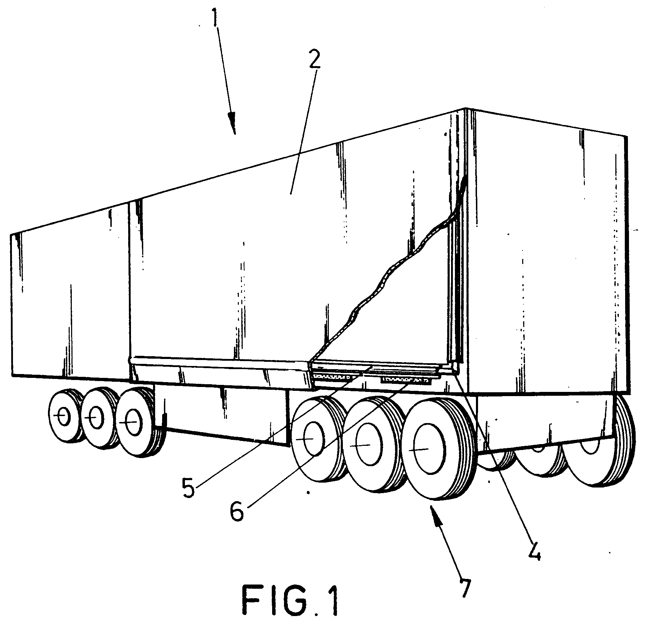

Figure 1 represents a perspective view of a refrigeration trailer, one of the lateral walls of which, is determined by an isothermal curtain which has been partially sectioned in order to illustrate the configuration and location of the sealing lock device according to the invention.

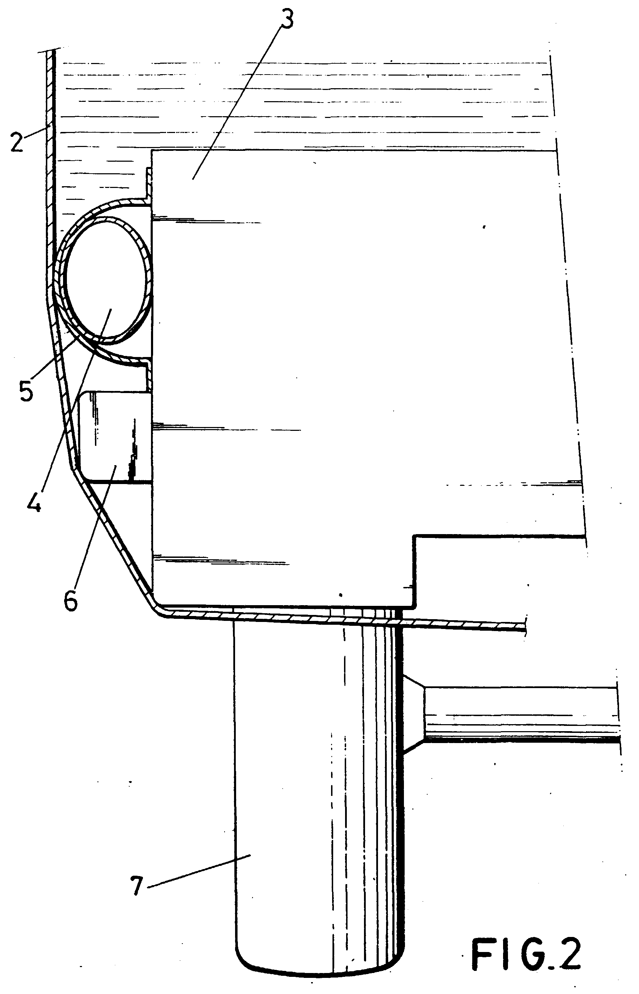

Figure 2 represents a partial detail view, according to a cross section of the refrigeration trailer, and more specifically on its lower zone, with the object of making clear the structure of the tubular body, the cover and the profile which protects both when conducting the loading and unloading operation.
Figure 3 represents a detailed perspective view of the device which facilitates the attachment and tensing of the isothermal curtains according to the invention, and which is located on the lower part of the trailer illustrated in figure 1.

### PREFERRED EMBODIMENT DESCRIPTION

A description of the invention is herwith offered, based on the previously indicated figures.

In compliance with what has been indicated in previous sections, the invention is applicable on those refrigeration trailers or vehicles 1, at least one of the lateral walls of which are determined by isothermal curtains 2 which are supported on a rail over which they are capable of displacement, in such a manner, that after unfolding, they are attached on the lower part of the trailer 1.

Then, such as has been described, this type of lock presents the disadvantage that on all the perimeter or framework of the trailer on which the isothermal curtain 2 closes, great losses of frigories are produced.

Consequently, the invention increases the tightness of the isothermal curtain 2 on the framework 3 of the trailer, including on all the framework 3 or perimeter of the wall to be covered with the isothermal curtain 2, a tubular body 4 which is inflated by means of a fluid, once the isothermal curtains have been closed and tensed. The tension elements shall be subsequently described.

The inflation of the tubular body 4, produces an additional pressure on all the locking perimeter, which considerably reduces the loss of cold on all said zone.

Tubular body 4 is supported on the framework 3 or perimeter of the trailer 1 wall, by means of a longitudinal cover 5 which envelops the tubular body and which is attached to framework 3 or lateral perimeter corresponding to trailer 1.

The tubular body is evidently in communication through a valve, with the means which facilitate the introduction of the fluid in said tubular body 4.

The longitudinal cover 5 which envelops the tubular body 4, determines, apart from constituting a support elements, a means of protection of the tubular body 4, both when inflated and when deflated, which represents an additional advantage.

The same is not protected by the longitudinal cover 5 on the apex zone of the tubular body 4, since these zones are less susceptible of the risk of being struck, though evidently, the apexes formed by the tubular body 4 may be equally protected by cover 5.

Moreover, the lower section of framework 3, and below the assembly determined by the tubular body 4 and the cover 5, is provided with a stop element constituted by a rubber profile 6 which protects the device when deflated and during the loading and unloading operation, since said operation after performing the aperture of the isothermal curtain 2, is carried out by means of transportation trolleys which have access to the trailer through the open zone, in consequence of which, when introducing or removing the product, the trolleys may strike the framework, damaging the sealing lock device. This may be prevented providing the stopping element 6, since the trolley would strike against the stopping element, preventing the knock against cover 5 and the tubular body 4, due to the fact that the assembly is deflated. Consequently, tubular body 4 is only inflated as was described, once the closure of the isothermal curtain 2 has been carried out.

The arrangement of an isothermal curtain has been provided in the exemplary embodiment, on one of the lateral sides with greater surface area, though evidently, the isothermal curtain may be placed on any of the three lateral sides of the refrigeration trailer 1, or on three sides at one time.

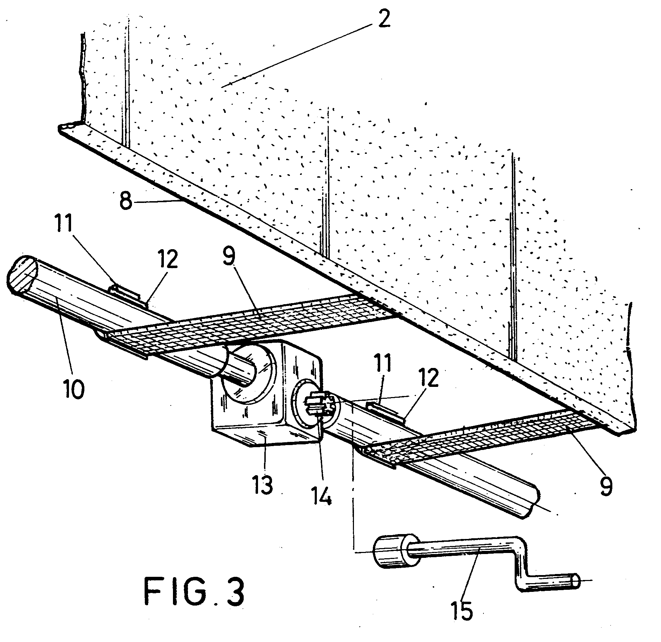

Figure 3 represents the sealing lock and the tension device of the isothermal curtains 2 which achieve the homogeneous tension of the same, for which a plurality of belts or girths 9, related with shaft 10 are sown throughout the length of their lower edge 8.

A shaft 10 is located on the lower part of the lorry and is equipped with a plurality of prongs 11 located in correspondence with girths 9.

The free end of girths 9 is finished off with a curved buckle 12, the function of which is complementary with that of prongs 11, such as shall be described herewith.

Shaft 10 engages with the worm located in a box 13, which may be located, for instance, in the center of the total length of the trailer or vehicle, such that the worm engages with the two shafts 10, which act at one same time, as shall be explained as follows.

The worm provided in box 13 is finished off according to an exterior head 14 which constitutes the means of location and retention of a handle 15.

In consequence, based on the described structure, it is easily understood that after inserting all the curved buckles 12, of one same lateral side, inside the corresponding prong 11, when the handle 15 is manually activated, the rotation of shaft 10 is produced, engaging with the worm located in box 13, which forces girths 9 to wind over shaft 10, achieving the homogeneous tension of all the belts 9 at one same time.

According to another embodiment of the invention, the worm located in box 13 is capable of being in relation with a motor, to achieve the automatic tension of the isothermal curtain.

## Claims

1. **SEALING LOCK AND TENSION DEVICE FOR ISOTHERMAL CURTAINS IN REFRIGERATOR VEHICLES,** characterized in that throughout the length of the framework (3) or lateral perimeter/s of the trailer (1), the walls of which are constituted by means of curtains (2), it includes a tubular body (4) which is related with inflation means, in such a manner that once the curtains are closed and tensed, the tubular body is inflated, thus producing an additional pressure on all the locking perimeter, reducing the loss of frigories.

2. **SEALING LOCK AND TENSION DEVICE FOR ISOTHERMAL CURTAINS IN REFRIGERATOR VEHICLES,** according to claim 1, characterized in that the tubular body (4) is supported and protected by means of a longitudinal cover (5) which envelops and attaches the same, to the framework.

3. **SEALING LOCK AND TENSION DEVICE FOR ISOTHERMAL CURTAINS IN REFRIGERATOR VEHICLES,** according to the previous claims, characterized in that the lower section of the framework and below the assembly determined by the tubular body (4) and the longitudinal cover (5), a profile (6) has been provided, preferibly constructed of rubber, for protection of the assembly formed by the tubular body and the cover of the same, when it is deflated during loading and unloading operations, in such a manner that it constitutes a stopping means of the trolleys which perform said loading and unloading, preventing them from causing damage to the assembly of the tubular body and the cover.

4. **SEALING LOCK AND TENSION DEVICE FOR ISOTHERMAL CURTAINS IN REFRIGERATOR VEHICLES,** according to claim 1, characterized in that the tension elements of the curtains area and determined by some girths (9) which are retained in a shaft (10) situated transversly to the same, which is related with rotation means, in such a manner that when the angular displacement of the shaft (10) is effected, it produces the winding of the girths (9) around the same, achieving the homogeneous tension of all the girths (9) at one same time.

5. **SEALING LOCK AND TENSION DEVICE FOR ISOTHERMAL CURTAINS IN REFRIGERATOR VEHICLES,** according to claim 4, characterized in that the shaft (10) is equipped with prongs (11) which facilitate the retention of a buckle (12) provided on the free end of the girths (9).

6. **SEALING LOCK AND TENSION DEVICE FOR ISOTHERMAL CURTAINS IN REFRIGERATOR VEHICLES,** according to claim 4, characterized in that the rotation means of the shaft (10) are determined by a worm located in a box (13) in which it engages with the shaft (10); the worm being equipped with an outer head (14) in which a handle (15) is placed, which facilitates the manual tensing of the isothermal curtain (2).

7. **SEALING LOCK AND TENSION DEVICE FOR ISOTHERMAL CURTAINS IN REFRIGERATOR VEHICLES,** according to claims 4, 5 and 6 characterized in that the worm is related with a motor which facilitates an automatic tensing of the isothermal curtains.

8. **SEALING LOCK AND TENSION DEVICE FOR ISOTHERMAL CURTAINS IN REFRIGERATOR VEHICLES,** according to claims 4 to 7, characterized in that the buckles (12) of girths (9) are curved in order to facilitate the winding over the shaft (10).

9. **SEALING LOCK AND TENSION DEVICE FOR ISOTHERMAL CURTAINS IN REFRIGERATOR VEHICLES,** according to claims 4 to 8, characterized in that the worm located in the box (13) is capable of engaging laterally with two shaft (10), in consequence of which, the box (13) is situated approximately half way down the length of the trailer, so that the tensing stresses are divided.

## Patentansprüche

1. Abdichtungsverschluß-und-Spann-Vorrichfung für isothermische Vorhänge von Kühlfahrzeugen, **dadurch gekennzeichnet**, daß über die gesamte Länge des Rahmens (3) bzw. den/die seitlichen Rand/Ränder des Anhängers (1), dessen Wände durch Vorhänge (2) gebildet werden, diese einen röhrenförmigen Körper (4) enthält, der so mit einer Aufblasrichtung verbunden ist, daß, wenn die Vorhänge geschlossen und gespannt sind, der röhrenförmige Körper aufgeblasen wird, so daß ein zusätzlicher Druck an dem gesamten Verschlußrand erzeugt wird und so Kälteverlust vermieden wird.

2. Abdichtungsverschluß`und-Spann-Vorrichtung für isothermische Vorhänge von Kühlfahrzeugen nach Anspruch 1, **dadurch gekennzeichnet**, daß der röhrenförmige Körper (4) von einer Längsabdeckung (5) an dem Rahmen gehalten und geschützt wird, die selbigen umschließt.

3. Abdichtungsverschluß-und-Spann-Vorrichtung für isothermische Vorhänge von Kühlfahrzeugen nach den vorangehenden Ansprüchen, **dadurch gekennzeichnet**, daß am unteren Abschnitt des Rahmens und unter der durch den röhrenförmigen Körper (4) und die Längsabdeckung (5) gebildeten Baugruppe ein Profil (6), das vorzugsweise aus Gummi besteht, vorhanden ist, um die aus dem röhrenförmigen Körper und der Abdeckung desselben bestehende Baugruppe zu schützen, wenn bei Be- und Entladevorgängen die Luft aus ihm abgelassen wird, und zwar so, daß sie eine Anschlageinrichtung für die Wagen bildet, mit denen das Be- und Entladen ausgeführt wird, so daß verhindert wird, daß diese die Baugruppe aus dem röhrenförmigen Körper und der Abdeckung beschädigen.

4. Abdichtungsverschluß-und-Spann-Vorrichtung für isothermische Vorhänge von Kühlfahrzeugen nach Anspruch 1 , **dadurch gekennzeichnet**, daß die Spannelemente der Vorhänge durch einige Gurte (9) gebildet werden, die an einer Welle (10) gehalten werden, die in quer zu ihnen angeordnet und mit einer Einrichtung zum Drehen verbunden ist, und zwar so, daß, wenn Winkelverschiebung der Welle (10) ausgeführt wird, die Gurte (9) um selbige herum gewickelt werden und so alle Gurte (9) gleichzeitig gleichmäßig gespannt werden.

5. Abdichtungsverschluß-und-Spann-Vorrichtung für isothermische Vorhänge von Kühlfahrzeugen nach Anspruch 4, **dadurch gekennzeichnet**, daß die Welle (10) mit Klauen (11) versehen ist, die das Halten einer Schnalle (12) ermöglichen, die am freien Ende der Gurte (9) vorhanden ist.

6. Abdichtungsverschluß-und-Spann-Vorrichtung für isothermische Vorhänge von Kühlfahrzeugen nach Anspruch 4, **dadurch gekennzeichnet**, daß die Einrichtung zum Drehen der Welle (10) durch eine Schnecke gebildet wird, die sich in einem Kasten (13) befindet, in dem sie mit der Welle (10) in Eingriff ist, wobei die Schnecke mit einem äußeren Kopf (14) versehen ist, an dem ein Griff (15) angebracht wird, der das manuelle Spannen des isothermischen Vorhangs (2) ermöglicht.

7. Abdichtungsverschluß-und-Spann-Vorrichtung für isothermische Vorhänge von Kühlfahrzeugen nach den Ansprüchen 4, 5, und 6, **dadurch gekennzeichnet**, daß die Schnecke mit einem Motor verbunden ist, der automatisches Spannen der isothermischen Vorhänge ermöglicht.

8. Abdichtungsverschluß-und-Spann-Vorrichtung für isothermische Vorhänge von Kühlfahrzeugen nach den Ansprüchen 4 bis 7, **dadurch gekennzeichnet**, daß die Schnallen (12) der Gurte (9) gekrümmt sind, um das Wickeln auf die Welle (10) zu ermöglichen.

9. Abdichtungsverschluß-und-Spann-Vorrichtung für isothermische Vorhänge von Kühlfahrzeugen nach den Ansprüchen 4 bis 8, **dadurch gekennzeichnet**, daß die Schnecke, die sich in dem Kasten (13) befindet, seitlich mit zwei Wellen (10) in Eingriff kommen kann, wodurch der Kasten (10) ungefähr in der Mitte der Länge des Anhängers angeordnet ist, so daß die Spannbelastungen verteilt werden.

## Revendications

1. Dispositif de tension et de fermeture étanche pour des rideaux isothermes dans des véhicules frigorifiques, caractérisé en ce que le long de toute la longueur de l'ossature (3) ou du (des) périmètre(s) latéral(aux) de la remorque (1), dont les parois sont constituées au moyen de rideaux (2), ce dispositif comprend un corps tubulaire (4) qui est relié à des moyens de gonflage, de telle manière qu'une fois que les rideaux sont fermés et tendus, le corps tubulaire est gonflé, de façon à produire une pression supplémentaire le long de tout le périmètre de fermeture, réduisant la perte de frigories.

2. Dispositif de tension et de fermeture étanche pour des rideaux isothermes dans des véhicules frigorifiques, selon la revendication 1, caractérisé en ce que le corps tubulaire (4) est porté et protégé au moyen d'un couvercle longitudinal (5) qui enveloppe et attache ce corps tubulaire à l'ossature.

3. Dispositif de tension et de fermeture étanche pour des rideaux isothermes dans des véhicules frigorifiques, selon les revendications précédentes, caractérisé en ce que dans la partie inférieure de l'ossature et sous l'ensemble constitué par le corps tubulaire (4) et le couvercle longitudinal (5), un profilé (6) a été prévu, de préférence fabriqué à partir de caoutchouc, pour la protection de l'ensemble formé par le corps tubulaire et le couvercle de ce corps, lorsqu'il est dégonflé pendant les opérations de chargement et déchargement, de telle manière qu'il constitue un moyen d'arrêt des chariots qui réalisent ce chargement et déchargement, empêchant celui-ci d'endommager l'ensemble constitué par le corps tubulaire et le couvercle.

4. Dispositif de tension et de fermeture étanche pour des rideaux isothermes dans des véhicules frigorifiques, selon la revendication 1, caractérisé en ce que les éléments de tension des rideaux sont constitués par des sangles (9) qui sont retenues sur un arbre (10), disposé transversalement à celles-ci, qui est relié à des moyens de rotation de telle manière que lorsqu'un déplacement angulaire de l'arbre (10) est effectué il produit l'enroulement des sangles (9) le long de cet arbre, réalisant ainsi la tension homogène de toutes les sangles (9) en même temps.

5. Dispositif de tension et de fermeture étanche pour des rideaux isothermes dans des véhicules frigorifiques, selon la revendication 4, caractérisé en ce que l'arbre (10) est équipé de griffes (11) qui facilitent la retenue d'une boucle (12) prévue sur l'extrémité libre des sangles (9).

6. Dispositif de tension et de fermeture étanche pour des rideaux isothermes dans des véhicules frigorifiques, selon la revendication 4, caractérisé en ce que les moyens de rotation de l'arbre (10) sont constitués par une vis sans fin disposée dans un boîtier (13) dans lequel elle coopère avec l'arbre (10) ; la vis sans fin étant équipée d'une tête extérieure (14) sur laquelle une poignée (15) est placée pour réaliser la tension manuelle du rideau isotherme (2).

7. Dispositif de tension et de fermeture étanche pour des rideaux isothermes dans des véhicules frigorifiques, selon les revendication 4,5 et 6, caractérisé en ce que la vis sans fin est reliée à un moteur pour réaliser une tension automatique des rideaux isothermes.

8. Dispositif de tension et de fermeture étanche pour des rideaux isothermes dans des véhicules frigorifiques, selon les revendications 4 à 7, caractérisé en ce que les boucles (12) des sangles (9) sont courbées de manière à faciliter l'enroulement autour de l'arbre (10).

9. Dispositif de tension et de fermeture étanche pour des rideaux isothermes dans des véhicules frigorifiques, selon les revendications 4 à 8, caractérisé en ce que la vis sans fin placée dans le boîtier (13) est adaptée pour coopérer latéralement avec deux arbres (10), en conséquence de quoi le boîtier (13) est disposé approximativement à mi chemin de la longueur de la remorque, si bien que les efforts de tension sont divisés.
